# EUROPÄISCHE PATENTSCHRIFT

(11) **EP 3 738 843 B1**
(45) Veröffentlichungstag und Bekanntmachung des Hinweises auf die Patenterteilung: **25.01.2023**
(21) Anmeldenummer: 20174049.5
(22) Anmeldetag: 12.05.2020
(51) Int. Cl.: B60T 10/04, B60T 1/093, F16D 57/06, B60T 7/04, B60T 7/08

(54) **HYDRAULIKSYSTEM**
HYDRAULIC SYSTEM
SYSTÈME HYDRAULIQUE

(30) Priorität: 14.05.2019 DE 102019206982
(43) Veröffentlichungstag der Anmeldung: 18.11.2020
(73) Patentinhaber: Deere & Company, Moline, IL 61265 (US)
(72) Erfinder: MEID, Michael, 68163 Mannheim (DE); TRAUT, Sebastian, 68163 Mannheim (DE); BILLICH, Manuel, 68163 Mannheim (DE); KLITTICH, Mathias, 68163 Mannheim (DE)
(74) Vertreter: Dehnhardt, Florian Christopher

(56) Entgegenhaltungen:
- EP-A1- 2 328 785
- EP-B1- 2 328 785
- DE-A1-102012 112 381
- US-A1- 2008 298 977

## Beschreibung

Die vorliegende Erfindung betrifft ein Hydrauliksystem eines landwirtschaftlichen oder industriellen Fahrzeugs, mit wenigstens einer, insbesondere lastabhängig steuerbaren Hydraulikpumpe mit variabler Förderleistung, die mechanisch wirksam mit einem Antrieb des Fahrzeugs verbindbar ist, wenigstens einem ersten Bremssystem zur Reduzierung der Geschwindigkeit des Fahrzeugs mittels wenigstens einer Reibungsbremse, und einem Dauerbremssystem, das zusätzlich zu und/oder unabhängig von dem ersten Bremssystem die Geschwindigkeit des Fahrzeugs reduzieren kann, ein Fahrzeug und eine Fahrzeugkombination.

Hydrauliksysteme dieser Art sind z.B. aus den Patentdokumenten US 2008/298977 A1, EP 2 328 785 A1 und DE 10 2012 112381 A1 bekannt.

Beim Bremsen schwerer Fahrzeuge müssen insbesondere bei langen Bergabfahrten hohe Energien umgewandelt werden. In derartigen Fällen kann es dazu kommen, dass die Kühlleistung eines üblichen, meist Reibungsbremsen, beispielsweise in der Art von Bremsscheiben, aufweisenden Bremssystems nicht ausreichend ist. Des Weiteren kann an dem Bremssystem bzw. an der/den Reibungsbremsen des Bremssystems ein Verschleiß entstehen, der die Lebensdauer verringern kann.

Es ist bekannt, zur Reduzierung der Geschwindigkeit eines Fahrzeugs eine Motorbremse einzusetzen. Diese kann jedoch in der Leistung begrenzt sein und/oder keine optimale Regelung der Bremswirkung ermöglichen. Des Weiteren wird bei einer üblichen Motorbremse die Anhängerbremse nicht angesteuert, was zu schwierigen Fahrsituationen führen kann. Wird an einer Fahrzeugkombination ein Anhängegerät im Falle einer Dauerbremsung nicht oder zu wenig verzögert, so kann es zu einem sogenannten "Jack-Knifing", einem Auffalten der Fahrzeugkombination kommen.

Die der Erfindung zugrundeliegende Aufgabe wird daher darin gesehen, ein Hydrauliksystem, ein Fahrzeug und eine Fahrzeugkombination vorzusehen, durch welche die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Diesbezüglich weist ein Hydrauliksystem eines landwirtschaftlichen oder industriellen Fahrzeugs wenigstens eine, insbesondere lastabhängig steuerbare Hydraulikpumpe mit variabler Förderleistung, die mechanisch wirksam mit einem Antrieb des Fahrzeugs verbindbar ist, wenigstens ein erstes Bremssystem zur Reduzierung der Geschwindigkeit des Fahrzeugs mittels wenigstens einer Reibungsbremse, und ein Dauerbremssystem, das zusätzlich zu und/oder unabhängig von dem ersten Bremssystem die Geschwindigkeit des Fahrzeugs reduzieren kann, auf. Das Dauerbremssystem wiederum weist wenigstens einen ersten Retarderkreis auf, der mit der Hydraulikpumpe derart zusammenwirken kann, dass dem Fahrzeug durch das Dauerbremssystem über die Hydraulikpumpe Bewegungsenergie entzogen wird, um eine Verzögerung des Fahrzeugs zu bewirken. Auf diese Weise kann das Fahrzeug unter Verwendung einer bereits für andere Einsatzzwecke am Fahrzeug befindlichen Hydraulikpumpe verzögert werden. Dies kann die Anzahl an Bauteilen und/oder die Komplexität des Systems reduzieren und ist kostengünstig. Die Hydraulikpumpe kann beispielsweise vorgesehen sein, um ein Brems- und/oder Lenksystem, eine/andere Baugruppe(n) des Fahrzeugs und/oder ein/mehrere Anbaugerät(e) mit Hydraulikmittel zu versorgen bzw. mit Hydraulikdruck zu beaufschlagen.

Weist der erste Retarderkreis Mittel zur Reduzierung der Bewegungsenergie bzw. einer Umwandlung der Bewegungsenergie in Wärme auf, können vorzugsweise Mittel vorgesehen sein, um in dem Hydraulikmittel aufgenommene Energie, insbesondere Wärme, aus dem Hydrauliksystem abzuführen. Diese Mittel können insbesondere in der Art eines Kühlers ausgebildet sein, wobei es sich bei dem Kühler um eine spezielle Kühleinrichtung für das Dauerbremssystem und/oder eine, beispielsweise bereits für andere Einsatzzwecke vorhandene Kühleinrichtung des Fahrzeugs handeln kann.

Die Mittel können dabei in der Art wenigstens eines Druckbegrenzungsventils oder wenigstens einer Lastblende ausgebildet sein oder wenigstens ein solches/eine solche aufweisen. Mittels eines vorgeschalteten Proportionalventils bzw. eines oder mehrerer vorgeschalteten/r Schaltventil(e) kann darüber hinaus die durch das Dauerbremssystem entnommene Menge an Hydraulikmittel bestimmt werden.

Besonders einfach ist es, wenn die Hydraulikpumpe mit dem Antrieb über eine Getriebeeingangswelle verbunden ist.

Vorzugsweise ist wenigstens ein Bremsmittel vorgesehen, durch das zumindest das erste Bremssystem und/oder das Dauerbremssystem betätigt werden kann. Bei dem Bremsmittel kann es sich beispielsweise um ein Bremspedal des Fahrzeugs handeln. Es ist aber auch denkbar, insbesondere zur Betätigung des Dauerbremssystems, ein vorzugsweise manuell betätigbares Bremsmittel, insbesondere in der Art eines Bremshebels oder eines Schalters vorzusehen, so dass eine Bedienungsperson das Bremsmittel zur Verzögerung des Fahrzeugs nicht dauerhaft betätigt halten muss.

Es kann eine Steuereinheit vorgesehen sein, über die das Dauerbremssystem angesteuert, insbesondere aktiviert bzw. deaktiviert, und/oder über die die durch das Dauerbremssystem bewirkte Verzögerung gesteuert werden kann. Dies erfolgt vorzugsweise in Abhängigkeit von der Ausgabe eines mit der Steuereinheit wirksam verbundenen Sensors, insbesondere einem mit dem Bremsmittel zusammenwirkenden Wegsensor. Weist das Bremsmittel ein Bremspedal auf bzw. ist es als ein solches ausgeführt, kann die Steuereinheit dabei einen Betätigungs- bzw. Pedalweg des Bremspedals auswerten, der dann als Maß der gewünschten Verzögerung interpretiert werden kann. Vorzugsweise wirkt das Steuersystem mit wenigstens einem Proportionalventil bzw. einem oder mehreren Schaltventil(en) zusammen.

Zusätzlich zu dem ersten Retarderkreis ist erfindungsgemäß ein zweiter Retarderkreis vorgesehen, durch den bei einer Aktivierung des Dauerbremssystems ein Bremssystem eines Anhängegeräts mit Bremsdruck beaufschlagt werden kann. Auf diese Weise kann ein Anhängegerät zusammen mit dem Fahrzeug bzw. in Abhängigkeit von diesem abgebremst bzw. verzögert werden, wodurch einem "Jack-Knifing" bzw. einem Auffalten einer Fahrzeugkombination bestehend aus Fahrzeug und Anhängegerät entgegenwirkt werden kann.

Besonders vorteilhaft ist es, wenn zwischen dem zweiten Retarderkreis und dem Bremssystem des Anhängegeräts ein Systemtrennventil vorgesehen ist, so dass zwischen dem Retarderkreis und dem Bremssystem kein Ölaustausch erfolgt und/oder kein aufgeschäumtes Hydraulikmittel aus dem Retarderkreis in den Bremskreis gelangen kann. Auf diese Weise kann der Luftanteil im Öl geringgehalten werden.

Wird ein Fahrzeug mit einem Antrieb, insbesondere einem Verbrennungsmotor, und wenigstens einer Hydraulikpumpe, zur Versorgung wenigstens einer Baugruppe des Fahrzeugs mit Hydraulikdruck, wobei die Hydraulikpumpe mit dem Antrieb mechanisch wirksam verbunden ist, mit einem derartigen Hydrauliksystem ausgestattet, so kann eine bereits vorhandene Hydraulikpumpe verwendet werden, um ein verschleißfreies Bremsen zu realisieren Es kann so auf weitere/separate Mittel zur Erzeugung einer Dauerbremsung verzichtet werden, was kostengünstig und einfach ist. Bei dem Fahrzeug handelt es sich insbesondere um ein landwirtschaftliches oder industrielles Arbeitsfahrzeug, vorzugsweise in der Art eines Ackerschleppers oder Traktors. Es kann sich bei dem Fahrzeug aber auch um eine landwirtschaftliche Erntemaschine, eine selbstfahrende Spritze, ein Baufahrzeug, ein industrielles Transport-/Zugfahrzeug oder jedes andere geeignete Fahrzeug mit einer Hydraulikpumpe zur Versorgung einer Baugruppe und/oder eines Anbaugeräts des Fahrzeugs mit Hydraulikmittel handeln.

Eine Fahrzeugkombination mit einem zuvor beschriebenen Fahrzeug und wenigstens einem Anhängegerät ermöglicht es, das Anhängegerät gemeinsam und/oder in Abhängigkeit von dem Fahrzeug abzubremsen, um so einem "Jack-Knifing" bzw. einem Auffalten der Fahrzeugkombination entgegenzuwirken. Bei dem Anhängegerät kann es sich beispielsweise um einen Transportanhänger, einen Ladewagen, ein landwirtschaftliches Gerät, beispielsweise ein Erntegerät wie eine Ballenpresse, ein Heuwerbungsgerät, oder jedes andere, insbesondere landwirtschaftliche Gerät, wie beispielsweise eine gezogene Spritze, eine Sämaschine o.ä. handeln.

Anhand der Zeichnung, die mehrere Ausführungsbeispiele der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht eines landwirtschaftlichen Fahrzeugs mit einem Hydrauliksystem;
- Fig. 2: ein vereinfachte Darstellung eines ersten Ausführungsbeispiels des Hydrauliksystems gemäß Figur 1;
- Fig. 3: ein vereinfachtes Diagramm zur Veranschaulichung einer möglichst optimalen Aktivierungsabfolge eines Bremssystems und eines Dauerbremssystems des Fahrzeugs,
- Fig. 4: ein zweites Ausführungsbeispiel eines Hydrauliksystems gemäß Figur 1;
- Fig. 5a: eine symbolhafte Veranschaulichung der Anschlussmöglichkeiten eines Systemtrennventils gemäß dem zweiten Ausführungsbeispiel;
- Fig. 5b: eine vereinfachte Schnittdarstellung des Systemtrennventils gemäß Figur 5a;
- Fig. 6: ein drittes Ausführungsbeispiel eines Hydrauliksystems gemäß Figur 1;
- Fig. 7: ein viertes Ausführungsbeispiel eines Hydrauliksystems gemäß Figur 1 und
- Fig. 8: ein fünftes Ausführungsbeispiel eines Hydrauliksystems gemäß Figur 1.

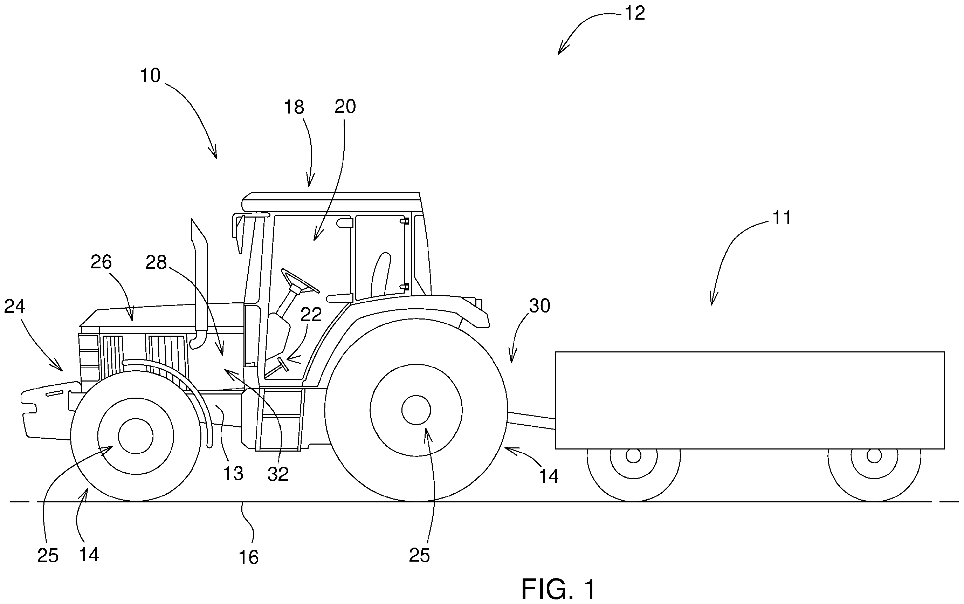

Die Figur 1 der Zeichnung zeigt ein landwirtschaftliches Fahrzeug 10 in der Art eines Ackerschleppers oder Traktors, das zusammen mit einem Anhängegerät 11 eine Fahrzeugkombination 12 bildet. Das Fahrzeug 10 weist einen Rahmen 13 auf, der sich über vordere und rückwärtige Räder 14 auf dem Untergrund 16 abstützt. In einer Kabine 18 ist ein Bedienerarbeitsplatz 20 angeordnet. In dem Bedienerarbeitsplatz 20 ist ein Bremspedal vorgesehen, das im Folgenden als Bremsmittel 22 bezeichnet wird, und welches auf eine Betriebsbremse bzw. ein Bremssystem 24 des Fahrzeugs 10 wirkt. Das Bremssystem 24 ist in bekannter Art und Weise ausgebildet und kann das Fahrzeug mittels Reibungsbremsen 25, insbesondere in der Art von Scheibenbremsen in Abhängigkeit von einer Stellung des Bremsmittels 22 verzögern. Das Fahrzeug 10 verfügt ferner über einen nur andeutungsweise gezeigten Antrieb 26 und ein ebenfalls nur angedeutetes Getriebe 28.

Sowohl der Antrieb 26 als auch das Getriebe 28 können in bekannter Art und Weise ausgestaltet sein, weshalb hier nicht näher auf beides eingegangen wird. Insbesondere ist der Antrieb 26 als ein Verbrennungsmotor ausgebildet.

Das in der Art eines üblichen Transportanhängers ausgeführte Anhängegerät 11 ist an eine Anhängeeinrichtung 30 des Fahrzeugs 10 angehängt Dieses Anhängegerät 11 ist optional vorgesehen. Es kann sich dabei um jedes geeignete Anhängegerät 11, beispielsweise einen Ladewagen, ein landwirtschaftliches Erntegerät, beispielsweise eine Ballenpresse, ein Heuwerbungsgerät, oder jedes andere, insbesondere landwirtschaftliche Gerät handeln. Darüber hinaus ist an dem Fahrzeug 10 ein Hydrauliksystem 32 vorgesehen.

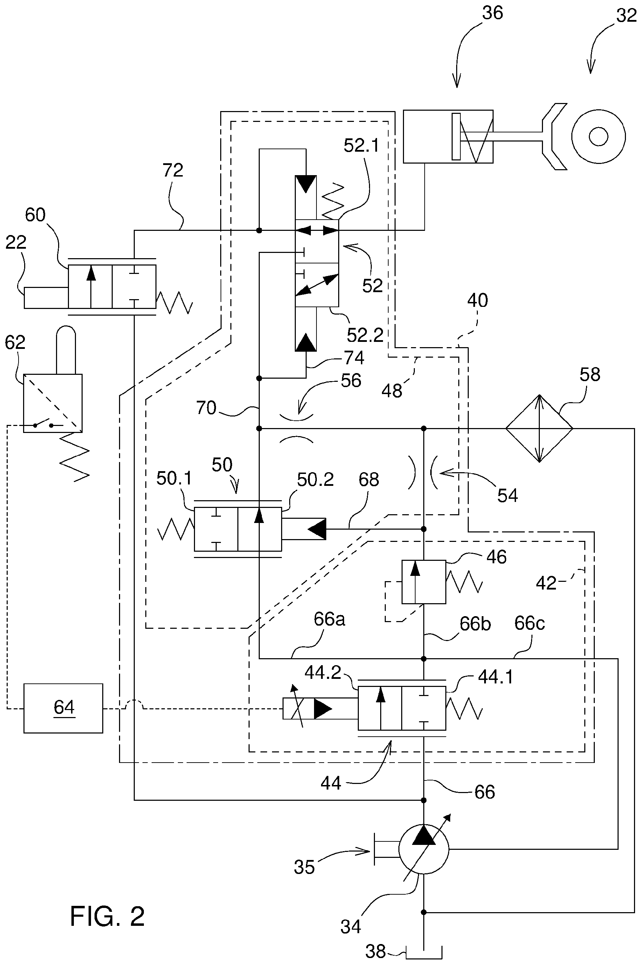

Es wird nun auch auf die Figur 2 der Zeichnung Bezug genommen, in der das Hydrauliksystem 32 des Fahrzeugs 10 vereinfacht dargestellt wird. Mit dem Antrieb 26 bzw. dem Getriebe 28 ist eine Hydraulikpumpe 34 mechanisch wirksam, üblicherweise über eine nur andeutungsweise gezeigte Getriebeeingangswelle 35, verbunden. Die Hydraulikpumpe 34 ist vorgesehen, um eine oder mehrere (nicht gezeigte) Baugruppen des Fahrzeugs 10 anzutreiben bzw. mit Hydraulikmittel zu versorgen. Bei den Baugruppen kann es sich beispielsweise um das Bremssystem 24 des Fahrzeugs 10, ein nicht gezeigtes Lenksystem, eine Hubeinrichtung oder andere geeignete Baugruppen handeln. Die Hydraulikpumpe 34 kann aber auch optional das Anhängegerät 11 mit Hydraulikmittel versorgen. Insbesondere kann die Hydraulikpumpe 34 Hydraulikmittel für eine mit dem Bremssystem 24 zusammenwirkende Bremseinrichtung 36 des Anhängegeräts 11 zur Verfügung stellen. Die Hydraulikpumpe 34 ist als eine bekannte Hydraulikpumpe mit variablem Fördervolumen ausgebildet, die abhängig von einem Lastdruck geregelt werden kann und die Hydraulikmittel aus einem Hydraulikmittelreservoir 38 des Fahrzeugs 10 bezieht.

Darüber hinaus ist ein Retarder- bzw. Dauerbremssystem 40 vorgesehen, welches beispielsweise initial bzw. vor und/oder zusätzlich zu dem Bremssystem 24, insbesondere bei anspruchsvollen Bremssituationen, beispielsweise bei (länger andauernden) Bergabfahrten zum Einsatz kommen kann.

Das Dauerbremssystem 40 weist einen Fahrzeug-Retarderkreis, der im Folgenden als erster Retarderkreis 42 bezeichnet wird, mit einem in Richtung seiner geschlossenen Stellung 44.1 federbelasteten Proportionalventil 44, und einem Druckbegrenzungsventil 46, und einen Anhänger-Retarderkreis, der im Folgenden als zweiter Retarderkreis 48 bezeichnet wird, für das optionale Anhängegerät 11, mit einem in Richtung seiner geschlossenen Stellung 50.1. federbelasteten Regelventil 50, einem Umschaltventil 52, einer Messblende 54 sowie einer Entlastungsblende 56 auf. Darüber hinaus ist zur Kühlung des Hydraulikmittels eine Kühleinrichtung, die im Folgenden kurz als Kühler 58 bezeichnet wird, sowie ein durch das Bremsmittel 22 betätigbares Bremsventil 60 und ein Wegsensor 62 zur Ermittlung der Stellung des Bremsmittels 22 vorgesehen. Der Wegsensor 62 wirkt mit einer Steuereinheit 64 zusammen, welche unter anderem das Bremssystem 24 des Fahrzeugs 10 ansteuert. Darüber hinaus wirkt sie mit dem Dauerbremssystem 40 zusammen und steuert das Proportionalventil 44 in Abhängigkeit von einer Stellung des Wegsensors 62 an. Abhängig von der Stellung des Wegsensors 62 kann die Steuereinheit 64 das Proportionalventil 44 aus seiner geschlossenen Stellung 44.1 in eine einen Hydraulikfluss ermöglichende Stellung 44.2 bringen.

Das Proportionalventil 44 des ersten Retarderkreises 42 ist stromabwärts der Hydraulikpumpe 34 vorgesehen und mit dieser über eine erste Leitung 66 verbunden. Die Leitung 66 teilt sich stromabwärts des Proportionalventils 44 in einen ersten Leitungsstrang 66a, der Hydraulikmittel zu dem Regelventil 50 des zweiten Retarderkreises 48 führt, und einen zweiten Leitungsstrang 66b, der Hydraulikmittel von dem Proportionalventil 44 zu dem federbelasteten Druckbegrenzungsventil 46 leitet. Ein dritter Leitungsstrang 66c übermittelt den anstehenden Lastdruck an die Hydraulikpumpe 34.

Die Messblende 54 ist dem Druckbegrenzungsventil 46 nachgeordnet, wobei vor der Messblende 54 von dem zweiten Leitungsstrang 66b eine Steuerleitung 68 des Regelventils 50 derart abzweigt, dass das Regelventil 50 mit dem Rückstaudruck der Messblende 54 angesteuert werden kann, um entsprechend seine geöffnete Stellung 50.2 einzunehmen. Die Entlastungsblende 56 ist zur Ansteuerung des richtigen Bremsdrucks und zum Abbau des Bremsdrucks dem Regelventil 50 in Richtung des Hydraulikmittelreservoirs 38 nachgeschaltet. Über den Kühler 58 kann Hydraulikmittel zurück in das Hydraulikmittelreservoir 38 gelangen.

Von dem Regelventil 50 führt eine weitere Hydraulikleitung 70 Hydraulikmittel zu dem Umschaltventil 52, um dieses mit Bremsdruck zu beaufschlagen. Das Umschaltventil 52 weist eine erste Stellung 52.1 auf, in der es die Bremseinrichtung 36 des Anhängegeräts 11 über die Hydraulikleitung 70 mit Hydraulikmittel versorgen und mit Bremsdruck beaufschlagen kann, und eine zweite, vorgespannte Stellung 52.2 auf, in der es die Bremseinrichtung 36 über das vereinfacht dargestellte Bremsventil 60 direkt über eine vor dem Dauerbremssystem 40 unabhängige Bremsleitung 72 des Bremssystems 24 mit Hydraulikmittel versorgen kann.

Das Umschaltventil 52 nimmt seine erste Stellung 52.1 ein, wenn in der Hydraulikleitung 70 und damit in einer Steuerleitung 74 des Umschaltventils 52 ein ausreichend hoher Bremsdruck ansteht. Ist der in der Steuerleitung 74 anstehende Druck nicht ausreichend hoch bzw. wird das Bremsmittel 22 durch eine Bedienerperson derart stark betätigt, dass das Umschaltventil 52 seine zweite Stellung 52.2 einnimmt, wird die Hydraulikpumpe 34 über das Bremsmittel 22 bzw. das Bremsventil 60 mit der Bremseinrichtung 36 des Anhängegeräts 11 verbunden. Das Umschaltventil 52 ist dabei so gestaltet sein, dass das Bremssystem 24 den in dem Dauerbremssystem 40 anstehenden Druck immer übersteuern kann.

Im Folgenden soll nun auf die Funktion des Dauerbremssystems 40 genauer eingegangen werden. Wird in einer Bremssituation durch die Bedienungsperson das Bremsmittel 22 betätigt, so wird dies durch den Wegsensor 62 aufgenommen. Dieser übermittelt einen Ausgabewert an die Steuereinheit 64, welche in Abhängigkeit von dem Ausgabewert das Proportionalventil 44 ansteuert, so dass dieses entsprechend dem Ausgabewert des Wegsensors 62 einen Hydraulikmittelfluss ermöglicht. Somit erfolgt über das Proportionalventil 44 eine Einstellung der Bremsleistung in Abhängigkeit von dem Weg des Bremsmittels 22.

Die Bremsleistung des Dauerbremssystems 40 wird gemäß dem vorliegenden Ausführungsbeispiel in dem Druckbegrenzungsventil 46 umgesetzt. Die Förderleistung der Hydraulikpumpe 34 wiederum wird entsprechend dem vor dem Druckbegrenzungsventil in der Leitung 66 anstehenden Lastdruck angesteuert, wodurch aufgrund der mechanischen Verbindung der Hydraulikpumpe 34 mit dem Antrieb 26, Bewegungsenergie des Fahrzeugs 10 abgebaut wird. Das Hydraulikmittel führt die Energie in Form von Wärme ab und wird gemäß dem gezeigten Beispiel über den Kühler 58 gekühlt. Es ist aber auch denkbar, dass das Hydraulikmittel über eine bereits an dem Fahrzeug 10 vorgesehene Kühleinrichtung oder auch zusätzlich durch eine solche Kühleinrichtung gekühlt wird.

Durch die zuvor gezeigte Ausgestaltung kann über das gesamte Drehzahlband der Hydraulikpumpe 34 eine hohe Bremsleistung erzielt werden. Aufgrund einer linearen Verlustleistungskennlinie ist die Regelung auch sehr gut realisierbar.

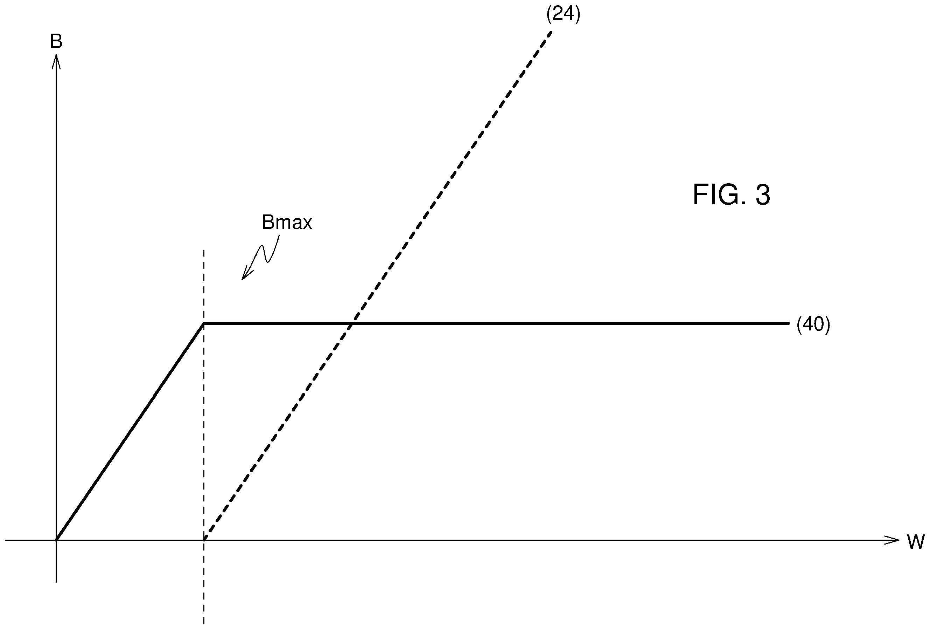

Es wird nun auch auf die Figur 3 Bezug genommen, die zeigt, wie eine möglichst optimale Aktivierung des Bremssystem 24 und des Dauerbremssystem 40 erfolgen kann Zum Erreichen einer Bremswirkung betätigt eine Bedienungsperson das Bremsmittel 22. Über den vorhandenen Wegsensor 62 am Bremsmittel 22 wertet die Steuereinheit 64 den Pedalweg W aus. Dieser wird als Maß der gewünschten Verzögerung bzw. Bremsleistung B interpretiert. Bis zur maximal über das Dauerbremssystem 40 möglichen Verzögerung Bₘₐₓ wird ausschließlich über dieses gebremst. Bei einer weiteren Erhöhung des Pedalwegs W erfolgt eine Zuschaltung des Bremssystems 24.

Ist an dem Fahrzeug 10 ein Anhängegerät 11 angehängt, kann es vorteilhaft sein, wenn dem Anhängegerät 11 ebenfalls durch das Dauerbremssystem 40 ein Bremssignal geliefert wird. Auf diese Weise kann eine parallele Bremsung von Fahrzeug 10 und Anhängegerät 11 erfolgen und einem "Jack-Knifing"/Klappmesser-Effekt, also einem unerwünschten Auffalten von Fahrzeug 10 und Anhängegerät 11, vorgebeugt werden. Wie zuvor beschrieben, erfolgt dies über das sich in seiner ersten Stellung 52.1 befindende Umschaltventil 52. Wird das Fahrzeug 10 aber zusätzlich oder auch ausschließlich über das Bremssystem 24 gebremst, so nimmt das Umschaltventil 52 seine zweite Stellung 52.2 ein, in der es die Hydraulikpumpe 34 mit dem Bremssystem 36 des Anhängegeräts 11 derart verbindet, dass diese durch die Hydraulikpumpe 34 mit Bremsdruck beaufschlagt wird.

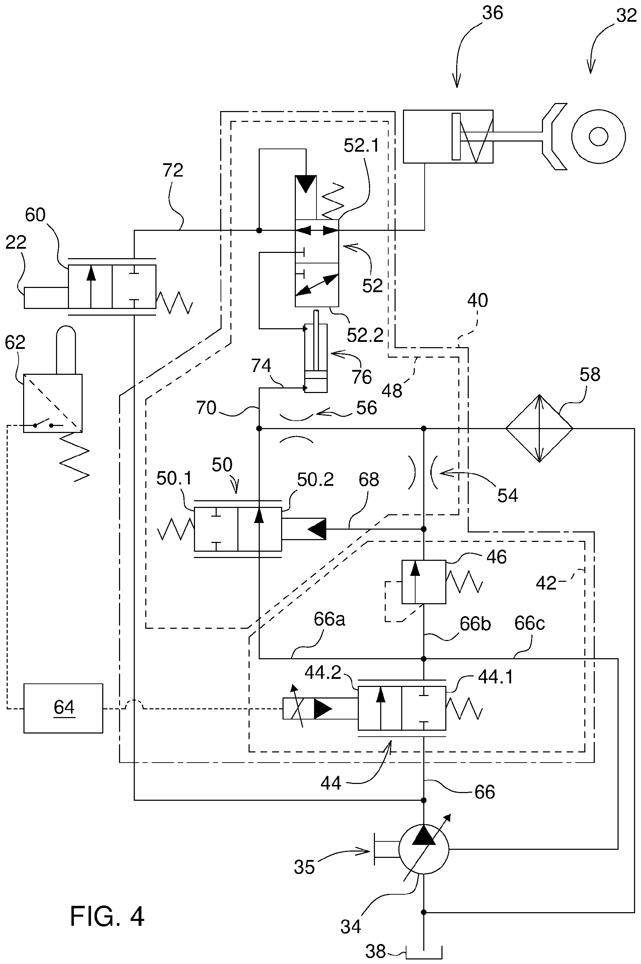

Es wird nun auch auf die Figur 4 der Zeichnung Bezug genommen, in der ein zweites Ausführungsbeispiel der vorliegenden Erfindung gezeigt wird, bei dem eine Trennung zwischen dem Bremssystem 36 des Anhängegeräts 11 und dem Dauerbremssystem 40 vorgesehen ist. Durch ein Vorsehen einer Trennung gelangt kein Hydraulikmittel aus dem Dauerbremssystem 40 in das Bremssystem 36 des Anhängegeräts 11, der Luftanteil im Hydraulikmittel kann sehr geringgehalten werden und/oder es kann kein aufgeschäumtes Hydraulikmittel aus dem Dauerbremssystem 40 in das Bremssystem 36 des Anhängegeräts 11 bzw. das Bremssystem 24 des Fahrzeugs 10 gelangen. Zur Trennung der Bremssysteme 24, 36 und des Dauerbremssystems 40 ist ein Systemtrennventil 76 vorgesehen.

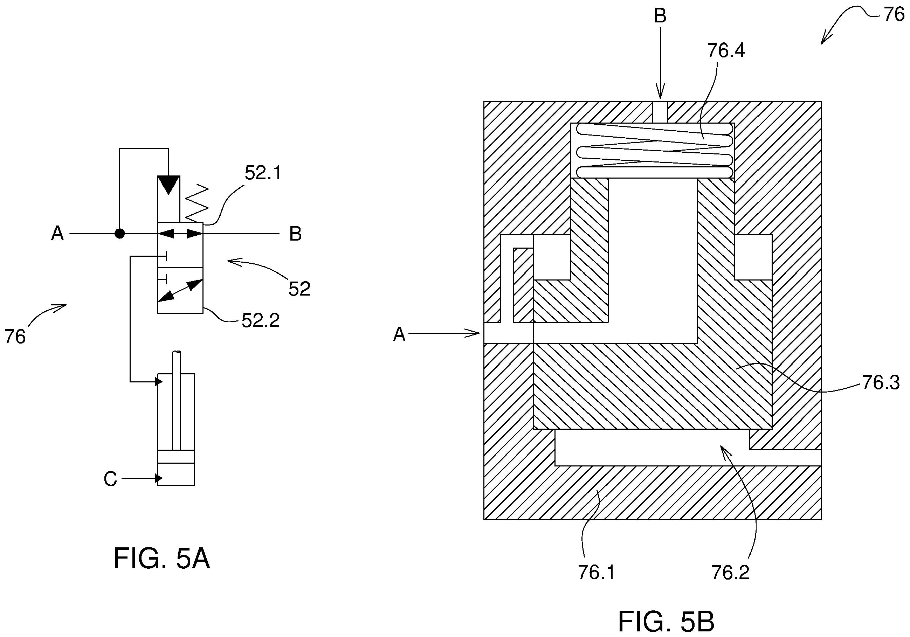

Es wird nun auch auf die Figuren 5a und b Bezug genommen, in denen in der Figur 5a die Anschlussmöglichkeiten des Systemtrennventils 76 als Schaltsymbol dargestellt und in Figur 5b anhand einer Schnittdarstellung der Aufbau des Systemtrennventils 76 genauer verdeutlicht wird. Das Systemtrennventil 76 weist ein Gehäuse 76.1 mit einem Innenraum 76.2 auf, in dem ein Kolben 76.3 gegen die Wirkung einer Feder 76.4 beweglich aufgenommen wird. Das Systemtrennventil 76 weist darüber hinaus einen ersten Anschluss A, einen zweiten Anschluss B sowie einen dritten Anschluss C auf, wobei der Anschluss A mit dem Bremssystem 24 des Fahrzeugs 10, der Anschluss B mit dem Bremssystem 36 des Anhängegeräts 11 und der Anschluss C über die Hydraulikleitung 70 mit dem Dauerbremssystem 40 verbunden ist. Das Systemtrennventil kann eine erste Stellung, in der es wie in der Figur 5 a und b dargestellt eine Verbindung zwischen den Anschlüssen A und B herstellt und eine zweite Stellung einnehmen, in der der Kolben 76.3 gegen die Wirkung der Feder 76.4 durch einen an dem Anschluss C anstehenden Druck derart verschoben wird, dass eine Verbindung zwischen den Anschlüssen A und B unterbrochen wird und das sich im Innenraum 76.3 befindliche Hydraulikmittel über den Anschluss C in das Bremssystem 36 des Anhängegeräts 11 gedrückt wird, um es mit einem Bremsdruck zu beaufschlagen.

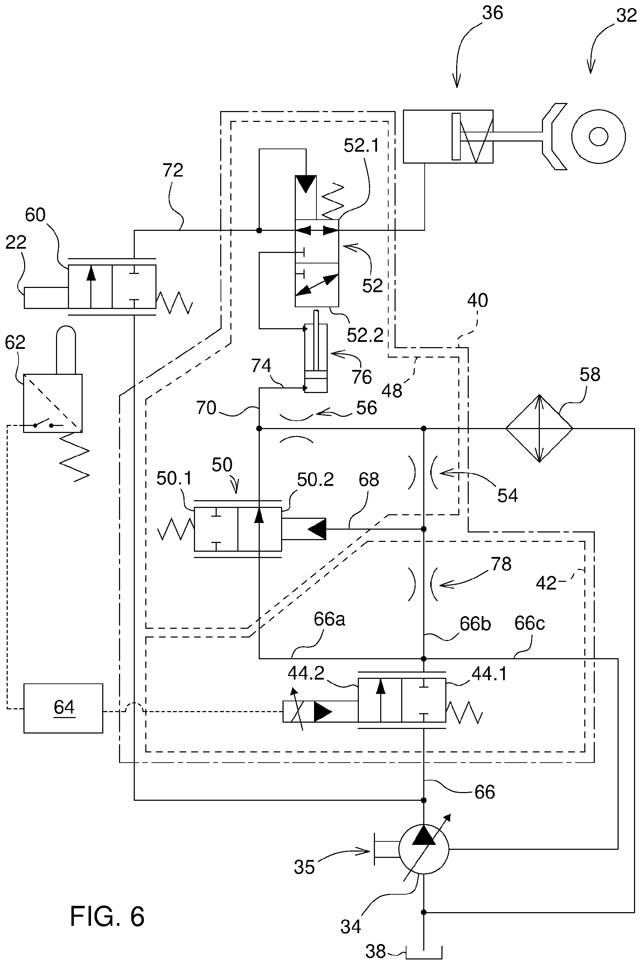

Es wird nun auf Figur 6 der Zeichnung Bezug genommen, in der ein drittes Ausführungsbeispiel der Erfindung dargestellt wird, das im Wesentlichen dem Ausführungsbeispiel gemäß Figur 4 entspricht. Die gezeigte Variante unterscheidet sich von dem in Figur 4 gezeigten Ausführungsbeispiel dadurch, dass das Druckbegrenzungsventil 46 durch eine Lastblende 78 ersetzt wird. Eine derartige Ausführung ist kostengünstiger, weist aber eine progressive anstatt einer lineare Charakteristik auf, wodurch eine geringere Bremsleistung bei Drehzahlen unterhalb der Auslegungsdrehzahl erzielt und eine weniger gute Regelbarkeit zur Verfügung gestellt wird.

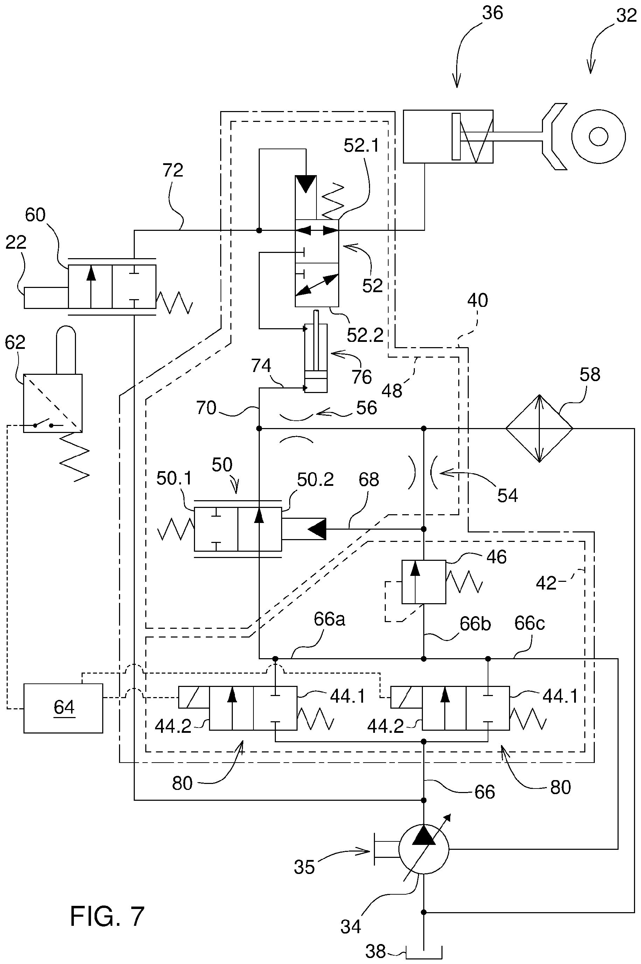

Das in Figur 7 gezeigte vierte Ausführungsbeispiel entspricht erneut im Wesentlichen dem Ausführungsbeispiel gemäß Figur 4, unterscheidet sich aber dadurch, dass das Proportionalventil 44 durch ein oder mehrere Schaltventile 80 ersetzt wird, wobei in dem gezeigten Ausführungsbeispiel zwei Schaltventile 80 zum Einsatz kommen. Eine derartige Ausführung ist kostengünstiger, erlaubt aber nur eine stufenweise Einstellung der Bremsleistung.

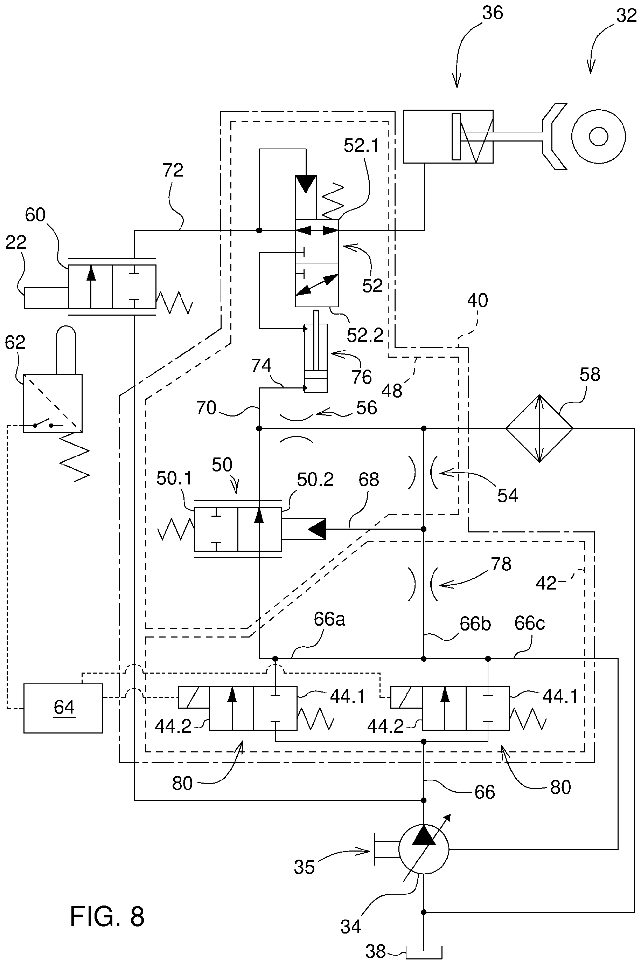

Das in Figur 8 gezeigte fünfte Ausführungsbeispiel kombiniert die Merkmale der Ausführungsbeispiele gemäß den Figuren 6 und 7. Hierbei handelt es sich um die kostengünstigste der gezeigten Varianten, wobei diese aber nur eine stufenweise und progressive Bremscharakteristik zur Verfügung stellt.

Es kann darüber hinaus vorgesehen sein, dass eine maximale Dauerbremsleistung durch eine speziell angepasste Getriebesteuerung unterstützt wird, die eine Drehzahl des Antriebs 26 bei Aktivierung des Dauerbremssystems 40 erhöht. Gleichzeitig kann dadurch eine evtl. vorhandene Motorbremse zusätzlich als Dauerbremse genutzt werden.

Es kann auch vorgesehen sein, dass das Dauerbremssystem 40 zusätzlich und/oder alternativ zu dem Wegsensor 62 durch einen speziellen, im Bereich des Bedienerarbeitsplatzes 20 vorgesehen Betätigungsmittel, beispielsweise einen Hebel oder Schalter erfolgen kann.

## Patentansprüche

1. Hydrauliksystem eines landwirtschaftlichen oder industriellen Fahrzeugs, mit wenigstens einer insbesondere lastabhängig steuerbaren Hydraulikpumpe (34) mit variabler Förderleistung, die mechanisch wirksam mit einem Antrieb (26) des Fahrzeugs (10) verbindbar ist,
wenigstens einem ersten Bremssystem (24) zur Reduzierung der Geschwindigkeit des Fahrzeugs (10) mittels wenigstens einer Reibungsbremse (25), und
einem Dauerbremssystem (40), das zusätzlich zu und/oder unabhängig von dem ersten Bremssystem (24) die Geschwindigkeit des Fahrzeugs (10) reduzieren kann, wobei das Dauerbremssystem (40) wenigstens einen ersten Retarderkreis (42) aufweist, der mit der Hydraulikpumpe (34) derart zusammenwirken kann, dass dem Fahrzeug (10) durch das Dauerbremssystem (40) über die Hydraulikpumpe (34) Bewegungsenergie entzogen wird, um eine Verzögerung des Fahrzeugs (10) zu bewirken, **dadurch gekennzeichnet, dass** wenigstens ein zweiter Retarderkreis (48) vorgesehen ist, durch den bei einer Aktivierung des Dauerbremssystems (40) ein Bremssystem (36) eines Anhängegeräts (11) mit Bremsdruck beaufschlagt werden kann.

2. Hydrauliksystem nach Anspruch 1, wobei der erste Retarderkreis (42) ein Mittel zur Reduzierung der Bewegungsenergie bzw. zur Umwandlung der Bewegungsenergie in Wärme sowie ein insbesondere in der Art eines Kühlers (58) ausgebildetes Mittel aufweist, um in einem Hydraulikmittel aufgenommene Energie, insbesondere Wärme, aus dem Hydrauliksystem (32) abzuführen.

3. Hydrauliksystem nach Anspruch 2, wobei das Mittel zur Reduzierung der Bewegungsenergie bzw. zur Umwandlung der Bewegungsenergie in Wärme in der Art wenigstens eines Druckbegrenzungsventils (46) oder wenigstens einer Lastblende (78) ausgebildet ist.

4. Hydrauliksystem nach einem der vorherigen Ansprüche, wobei die Hydraulikpumpe (34) mit dem Antrieb (26) über eine Getriebeeingangswelle (35) verbunden ist.

5. Hydrauliksystem nach einem der vorherigen Ansprüche, wobei wenigstens ein Bremsmittel (22) vorgesehen ist, durch das zumindest das erste Bremssystem (24) und/oder das Dauerbremssystem (40) betätigt werden kann.

6. Hydrauliksystem nach einem der vorherigen Ansprüche, wobei eine Steuereinheit (64) vorgesehen ist, über die das Dauerbremssystem (40) vorzugsweise in Abhängigkeit von der Ausgabe eines mit der Steuereinheit (64) wirksam verbundenen Sensors, insbesondere einem mit dem Bremsmittel (22) zusammenwirkenden Wegsensor (62), angesteuert, insbesondere aktiviert bzw. deaktiviert, und/oder über die die durch das Dauerbremssystem (40) bewirkte Verzögerung gesteuert werden kann, und die Steuereinheit (64) hierfür vorzugsweise mit wenigstens einem Proportionalventil (44) bzw. einem oder mehreren Schaltventil(en) (80) zusammenwirkt.

7. Hydrauliksystem nach einem der vorherigen Ansprüche, wobei zwischen dem zweiten Retarderkreis (48) und dem Bremssystem (36) des Anhängegeräts (11) ein Systemtrennventil (76) vorgesehen ist.

## Claims

1. Hydraulic system of an agricultural or industrial vehicle, comprising at least one hydraulic pump (34) with variable delivery capacity which is controllable, in particular, as a function of the load and which may be operatively connected by mechanical means to a drive (26) of the vehicle (10),
at least one first brake system (24) for reducing the speed of the vehicle (10) by means of at least one friction brake (25), and a permanent brake system (40) which in addition to and/or independently of the first brake system (24) may reduce the speed of the vehicle (10), wherein the permanent brake system (40) comprises at least one first retarder circuit (42) which may cooperate with the hydraulic pump (34) such that kinetic energy is removed from the vehicle (10) by the permanent brake system (40) via the hydraulic pump (34) in order to effect a deceleration of the vehicle (10), **characterized in that** at least one second retarder circuit (48) is provided, brake pressure being able to be applied thereby to a brake system (36) of a trailer device (11) when the permanent brake system (40) is activated.

2. Hydraulic system according to Claim 1, wherein the first retarder circuit (42) comprises a means for reducing the kinetic energy and/or for converting the kinetic energy into heat, and a means, in particular configured in the manner of a cooler (58), in order to dissipate energy from the hydraulic system (32), in particular heat which has been absorbed in a hydraulic fluid.

3. Hydraulic system according to Claim 2, wherein the means for reducing the kinetic energy and/or for converting the kinetic energy into heat is configured in the manner of at least one pressure limiting valve (46) or at least one load orifice (78).

4. Hydraulic system according to one of the preceding claims, wherein the hydraulic pump (34) is connected to the drive (26) via a gear input shaft (35).

5. Hydraulic system according to one of the preceding claims, wherein at least one braking means (22) is provided, at least the first brake system (24) and/or the permanent brake system (40) being able to be actuated thereby.

6. Hydraulic system according to one of the preceding claims, wherein a control unit (64) is provided, the permanent brake system (40) preferably being able to be controlled, in particular activated and/or deactivated, thereby as a function of the output of a sensor which is operatively connected to the control unit (64), in particular a path sensor (62) cooperating with the braking means (22), and/or the deceleration effected by the permanent brake system (40) being able to be controlled thereby, and to this end the control unit (64) preferably cooperates with at least one proportional valve (44) and/or one or more switching valve(s) (80).

7. Hydraulic system according to one of the preceding claims, wherein a system separation valve (76) is provided between the second retarder circuit (48) and the brake system (36) of the trailer device (11).

## Revendications

1. Système hydraulique d'un véhicule agricole ou industriel, comprenant au moins une pompe hydraulique (34) pouvant être commandée en particulier en fonction de la charge et dotée d'une capacité de refoulement variable, laquelle pompe peut être reliée fonctionnellement de manière mécanique à un entraînement (26) du véhicule (10),
au moins un premier système de freinage (24) servant à la réduction de la vitesse du véhicule (10) au moyen d'au moins un frein à friction (25), et
un système de freinage continu (40) qui peut réduire la vitesse du véhicule (10) en plus du premier système de freinage (24) et/ou indépendamment de celui-ci, le système de freinage continu (40) présentant au moins un premier circuit ralentisseur (42) qui peut coopérer avec la pompe hydraulique (34) de telle sorte que de l'énergie cinétique soit retirée du véhicule (10) au moyen du système de freinage continu (40) par le biais de la pompe hydraulique (34), afin de provoquer une décélération du véhicule (10),
**caractérisé en ce qu'**au moins un deuxième circuit ralentisseur (48) est prévu, au moyen duquel, lors d'une activation du système de freinage continu (40), un système de freinage (36) d'un outil remorqué (11) peut être soumis à une pression de freinage.

2. Système hydraulique selon la revendication 1, le premier circuit ralentisseur (42) présentant un moyen servant à la réduction de l'énergie cinétique ou à la conversion de l'énergie cinétique en chaleur ainsi qu'un moyen réalisé en particulier à la manière d'un dispositif de refroidissement (58), afin d'évacuer, hors du système hydraulique (32), de l'énergie, en particulier de la chaleur, reçue dans un fluide hydraulique.

3. Système hydraulique selon la revendication 2, le moyen servant à la réduction de l'énergie cinétique ou à la conversion de l'énergie cinétique en chaleur étant réalisé à la manière d'au moins une soupape de limitation de pression (46) ou d'au moins un diaphragme de charge (78).

4. Système hydraulique selon l'une des revendications précédentes, la pompe hydraulique (34) étant reliée à l'entraînement (26) par le biais d'un arbre d'entrée de transmission (35).

5. Système hydraulique selon l'une des revendications précédentes, au moins un moyen de freinage (22) étant prévu, au moyen duquel au moins le premier système de freinage (24) et/ou le système de freinage continu (40) peu(ven)t être actionné (s) .

6. Système hydraulique selon l'une des revendications précédentes, une unité de commande (64) étant prévue, par le biais de laquelle le système de freinage continu (40) est commandé, en particulier activé ou désactivé, de préférence en fonction de la sortie d'un capteur relié fonctionnellement à l'unité de commande (64), en particulier d'un capteur de déplacement (62) coopérant avec le moyen de freinage (22), et/ou par le biais de laquelle la décélération provoquée par le système de freinage continu (40) peut être commandée, et l'unité de commande (64) coopérant à cet effet de préférence avec au moins une soupape proportionnelle (44) ou une ou plusieurs soupapes de commutation (80).

7. Système hydraulique selon l'une des revendications précédentes, une soupape de séparation de système (76) étant prévue entre le deuxième circuit ralentisseur (48) et le système de freinage (36) de l'outil remorqué (11).
